# EUROPEAN PATENT APPLICATION

(11) **EP 3 051 498 A1**
(43) Date of publication of application: **03.08.2016**
(21) Application number: 15765953.3
(22) Date of filing: 02.02.2015
(51) Int. Cl.: G06T 17/05, G06T 11/60, G09B 29/00, G09B 29/10

(54) **THREE-DIMENSIONAL-MAP DISPLAY SYSTEM**

(30) Priority: 19.03.2014 JP 2014055712
(71) Applicant: Geo Technical Laboratory Co., Ltd., Fukuoka-shi, Fukuoka 812-0013 (JP)
(72) Inventor: ARAMAKI Masatoshi, Fukuoka-shi Fukuoka 812-0013 (JP); KISHIKAWA Kiyonari, Fukuoka-shi Fukuoka 812-0013 (JP); TESHIMA Eiji, Fukuoka-shi Fukuoka 812-0013 (JP); UCHINOUMI Masashi, Fukuoka-shi Fukuoka 812-0013 (JP); NAKAGAMI Masaru, Fukuoka-shi Fukuoka 812-0013 (JP); AZAKAMI Tatsuya, Fukuoka-shi Fukuoka 812-0013 (JP); YONEKURA Tatsurou, Fukuoka-shi Fukuoka 812-0013 (JP)
(74) Representative: Eder Schieschke & Partner mbB
(86) International application number: PCT/JP2015/052845
(87) International publication number: WO 2015/141301

(57) **Abstract**

[Object]

To display a 3D map representing a feature that cannot be visually recognized such as an underground structure without a sense of discomfort.

[Solution]

With respect to features stored in the map database, an underground structure such as a tunnel are classified into a transmissive object, and other features into a non-transmissive object. Then, a transmissive object and a non-transmissive object are projected individually so as to generate a transmissive object projection view and a non-transmissive object projection view. The transmissive object projection view thus obtained is superposed on the non-transmissive object projection view with adjusted transmittance. Making the transmissive object to be transmissive and superposing it enables to realize a map that appears to the user as if a ground surface or a feature which has shielded the transmissive object is made to be transmissive whereby the transmissive object come to be visible.

## Description

### [Technical Field]

The present invention relates to a 3D map display system for displaying a 3D map representing a feature that cannot be visually recognized such as an underground structure without a sense of discomfort.

### [Background Art]

In electronic maps used in a navigation apparatus, a computer screen or the like, a 3D map representing features such as a building three-dimensionally is used in some cases. The 3D map is drawn by projecting a feature arranged in a virtual three-dimensional space by perspective projection or the like. Since the 3D map is to reproduce a state seen from a position of the point of sight, it is inevitable that a dead angle that cannot be visually recognized from the position of the point of sight is generated such as an underground structure including a tunnel or a road behind a high building.

In order to alleviate an influence by such dead angles, Patent Literature 1 discloses a technology of drawing a tunnel with a broken line or the like.

### [Citation List]

### [Patent Literature]

Patent Literature 1: Japanese Patent Laid-Open No. 11-24556

### [Summary of Invention]

### [Problem to be Solved by Invention]

A merit of the 3D map is that a user can intuitively grasp the geography since a state seen from the position of the point of sight is reproduced realistically. If the tunnel or the like is drawn with the broken line in the map as in Patent Literature 1, reality of the 3D map is lost, and representation gives a sense of extreme discomfort. That is, if an underground structure such as a tunnel is to be displayed, representation without a sense of discomfort which does not damage the merit of the 3D map is desirable. This is a problem common to cases of display of various portions that cannot be seen from the position of the point of sight including not only display of the underground structure but also display of the dead angle behind the building. The various portions that cannot be seen from the position of the point of sight cannot be displayed by a mere actually shot image, and capability of such display is one of the greatest merits of the 3D map.

The present invention was made in view of the aforementioned problems and has an object to enable display of a feature that cannot be visually recognized without a sense of discomfort in a 3D map.

### [Means for Solving the Problem]

The present invention is a 3D map display system for displaying a 3D map representing a feature three-dimensionally and can be configured as a 3D map display system, comprising:
a map database for storing a 3D model of the feature;
a projecting condition setting unit for setting a projecting condition for projecting the 3D map;
a transmissive object extracting unit for extracting at least a part of the feature shielded by a ground surface or other features as a transmissive object in accordance with its attribute;
a projection processing unit for generating a transmissive object projection view in which the transmissive object is projected and a non-transmissive object projection view in which a feature other than the transmissive object is projected; and
a superposing processing unit for superposing the transmissive object projection view on the non-transmissive object projection view at a predetermined transmittance.

The present invention displays a 3D map by dividing a feature into a transmissive object and a non-transmissive object, by projecting them individually so as to generate a transmissive object projection view and a non-transmissive object projection view, and by superposing the both. At this time, the transmissive object projection view is made transmissive at a predetermined transmittance. As a result, the transmissive object projection view is superposed on the non-transmissive object projection view in a slightly visible state and thus, the user feels as if the feature on a side of the non-transmissive object projection view is transmissive. Therefore, the transmissive object can be displayed, capable of being visually recognized without a sense of discomfort.

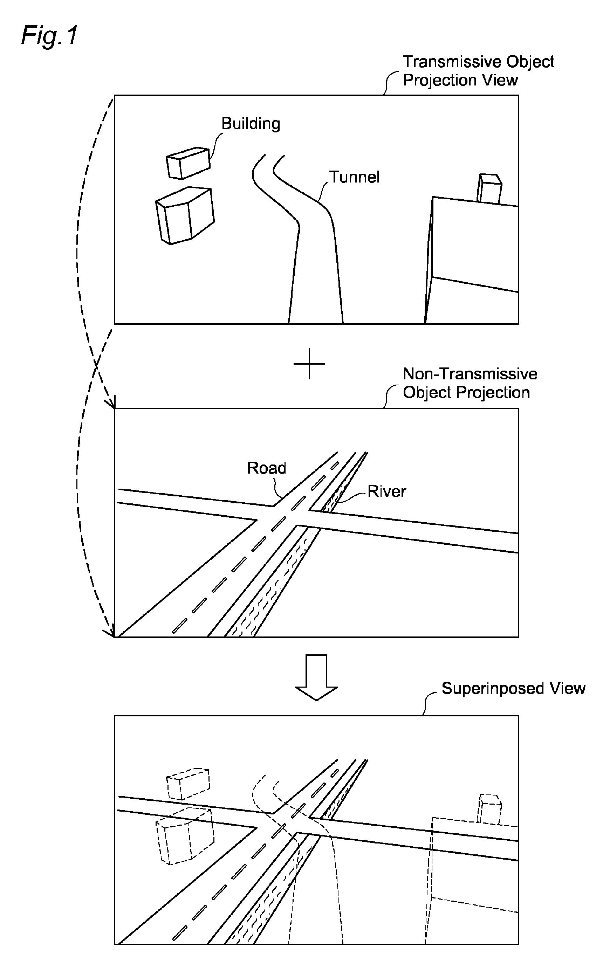

Fig. 1 is an explanatory view illustrating a display method of the 3D map display system. The display method of the 3D map in the present invention will be described on the basis of this display example.

As illustrated on an upper stage in the figure, a transmissive object projection view is generated by projecting a transmissive object. In this example, a tunnel under the ground and a part of a building are transmissive objects. A non-transmissive object projection view is generated by projecting a feature other than the transmissive object as illustrated in a middle stage in the figure. In the example in the figure, a road and a river are drawn in the non-transmissive object projection view. As indicated by broken-line arrows, by superposing the transmissive object projection view on the non-transmissive object projection view, a superposed view illustrated on a lower stage of the figure is generated. At this time, by adjusting transmittance on a side of the transmissive object projection view, the transmissive object is slightly displayed. By configuring as above, the tunnel can be displayed in a state as if the ground surface can be seen through.

The transmissive object can be set arbitrarily and can be a feature shielded by the ground surface or other features, that is, a feature that should not be visually recognized or can be a structure under the ground or a feature behind other buildings or the like, for example, that is, any feature shielded by the ground surface or the like. In the example in Fig. 1, the building is drawn without any features shielding in order to avoid overcrowding, but a building shielded by other features is preferably a transmissive object in order to utilize the merit of the present invention.

In the present invention, by displaying the transmissive object so that it can be visually recognized as described above, a dead angle in a 3D map can be reduced, and more information can be given as a map to the user.

In the prior art, there are methods in which a building or the like shielding a road behind it is made transmissive. The present invention has a characteristic that a shielding object is not made transmissive but an objects to be shielded is set to be a transmissive object and made transmissive. That is, the feature which should be behind is made transmissive and displayed on a front surface of the shielding feature. As a result, the user' s illusion is induced such that the user can recognize as if the shielding feature is transmissive, and since the transmissive object is superposed on the front surface, such a merit can be obtained that the feature can be visually recognized relatively clearly.

Moreover, the present invention does not apply transmission processing when the feature is projected but applies the transmission processing to the transmissive object projection view obtained by projection. Therefore, even if a large number of transmissive objects are present, the transmission processing unified as a whole can be applied with a light load, which is a merit.

A projecting condition for creating a transmissive object projection view and a non-transmissive object projection view can have various settings. As a projecting method, either one of perspective projection and parallel projection may be used. In the case of perspective projection, the projecting condition, that is, a position of the point of sight and a direction of the line of sight can be arbitrarily set. In the case of parallel projection, the projecting condition, that is, the projecting direction can be arbitrarily set.

Though the projecting condition can be arbitrarily set, a transmissive object projection view and a non-transmissive object projection view need to be projected under the same projecting condition so that they are superposed without positional discrepancy.

In the 3D map display system of the present invention,
the transmissive object may be an underground structure.

The underground structures include for example a tunnel under the ground, a basement part of a building, an underground shopping center and the like. By making them transmissive objects, display as if the ground surface can be seen through can be realized.

This aspect is particularly useful for route guidance processing when an underground tunnel is passed through, a guidance of an underground shopping center or guidance to an underground destination such as a subway or a shop present under the ground.

If an underground structure is made a transmissive object:
the map database may store a 3D model of a tunnel in a form of a polygon representing a line or a road surface;
the transmissive object may be the tunnel;
a tunnel model generating unit for generating a tunnel model by giving a wall to both sides of the road surface in the 3D model of the tunnel stored in the map database may be further provided; and
the projection processing unit may generate the transmissive object projection view on the basis of the tunnel model.

In the case of a tunnel, its 3D model is prepared in the form of a line or a polygon as a part of a road in many cases. The aforementioned aspect has a merit that the tunnel can be represented more realistically since the tunnel model with the wall is generated and projected even to such a simplified model.

However, the aforementioned aspect does not mean that the wall should be given when the tunnel is made to be a transmissive object. Instead of the aforementioned aspect, a 3D model of a tunnel may be prepared with the wall being given in advance.

A shape of the wall or the like when the tunnel model is generated can be arbitrarily set. For example, the wall may be generated so as to have a semicircular sectional shape which is a general shape of a tunnel. If the wall is generated as above, a gap having a predetermined width may be provided instead of fully covering an upper part of the tunnel. As a result, a road surface of the tunnel can be made visually recognizable, and more useful representation as a map can be realized.

If a tunnel is made to be a transmissive object:
network data representing a road by a node and a link; and
a current position detecting unit for detecting a current position of the user of the 3D map display system may be further provided, and
the transmissive object extracting unit may extract from among the tunnels, as the transmissive object, tunnels on the route or tunnels connected to the node ahead of the link where the current position is present, on the basis of route data representing a route to be guided by the 3D map display system by connection of the links and the network data.

As a result, a part of the tunnel can be a target to be displayed. If all the tunnels in the map are displayed, the user can visually recognize many tunnels that could not have been visually recognized in addition to the features such as roads which are usually visually recognizable, and there is a concern that an information amount is too large and incurs confusion. On the other hand, in the aforementioned mode, the tunnels are displayed after being narrowed to those considered to have higher importance for the user and thus, appropriate information can be given to the user.

In the aforementioned aspect, a tunnel on the route and a tunnel connected to the node ahead of the link where the current position is present are made to be display targets. The front means a side of an advancing direction of the user. Since such node represents a branch present in the advancing direction, unless the tunnel connected to the node is provisionally displayed, a 3D map looking as if there is no branch is displayed, which confuses the user. In order to avoid such a situation, the tunnel connected to such node is made to be a display target in the aforementioned aspect. Any condition for determining the tunnel to be displayed can be set other than the aforementioned two conditions.

If an underground structure is made to be a transmissive object,
the projection processing unit may perform the projection by perspective projection with a point of sight for the projection set to a position at a predetermined height of the point of sight relatively to the underground structure, and
a 3D model of the underground structure may be prepared with a depth under the ground surface being kept smaller than the height of the point of sight.

When the position of the point of sight of the perspective projection is set in a relative positional relation with the underground structure as in the aforementioned aspect, if the underground structure is present deep under the ground, there is a concern that the position of the point of sight is set in the ground. For example, in the case of a tunnel provided in a mountain, it is highly concerned that the position of the point of sight is set in the ground as it gets closer to a center of the mountain.

On the other hand, since the 3D model of the underground structure is generated with the depth under the ground surface being modified in the aforementioned aspect, the position of the point of sight under the ground can be avoided, and a map without a sense of discomfort can be displayed. In the 3D model in the aforementioned aspect, a shape of the underground structure is not accurately represented in a point that the depth in the ground is regulated, but if the point of sight is set as described above, display without a sense of discomfort can be realized rather better by using the 3D model in the form away from the reality in some cases.

If the position of the point of sight in the ground is to be merely avoided, a method that the position of the point of sight is controlled so as to be at a certain height from the ground surface can be considered. However, with this method, a distance from the position of the point of sight to the tunnel is too long in the vicinity of the center of the mountain, and there is a concern that the tunnel can be displayed only in a reduced manner. On the other hand, since a relative positional relation between the underground structure and the position of the point of sight can be maintained in the aforementioned aspect, this aspect has a merit that a negative effect that the underground structure becomes extremely small can be also avoided.

In the 3D map display system of the present invention, regardless of whether the underground structure is made to be a transmissive object or not,
the superposing processing unit may perform the superposition with transmittance of an upper part of the transmissive object projection view higher than that of a lower part.

The higher transmittance means that the view is brought close to transparent. According to the aforementioned aspect, the transmissive object can be visually recognized relatively clearly in the lower part, that is, in a part close to the position of the point of sight, while in the upper part, that is, in a distant part, the object can be displayed slightly to such a degree that is hardly visually recognizable. As a result, the transmissive object can be displayed so as to be faded out as it goes farther, and the sense of discomfort can be further alleviated.

The transmittance can be arbitrarily set. It may be changed linearly as it goes from the lower part to the upper part or may be changed in steps or in a curved manner. Moreover, in a certain region in the upper part, the transmissive object may be made fully transmissive, that is, invisible.

In the present invention, since the transmittance is changed with respect to the transmissive object projection view, the transmittance unified as a whole can be given with a light processing load even if a large number of the transmissive objects are present. If the method of individual control of transmittance of the transmissive object is employed for projection unlike the aspect of the present invention, such needs arise that a distance from the position of the point of sight is acquired for each transmissive object and the transmittance according to that is set individually, which requires extremely complicated processing. In the present invention, such a load can be avoided.

In the present invention, it is not necessary to comprise all of the aforementioned various characteristics but some of them may be omitted or combined as appropriate in configuration.

The present invention may also be configured as a map data generating apparatus for generating data of an underground structure for the 3D map display system.

That is, the map data generating apparatus comprises:
a map database storing a 3D model of the underground structure;
a modifying unit for modifying height data so that, in a portion where a depth under the ground surface is larger than the height of the point of sight, the depth is the height of the point of sight or less in the 3D model of the underground structure; and
a map database management unit for storing the modified 3D model in the map database.

By generating feature data as above, the depth under the ground surface can be suppressed and thus, nonconformity that the position of the point of sight is set in the ground can be avoided even if the position of the point of sight is determined in a relative relation with the feature.

As still another aspect, the present invention may be configured as a 3D map display method for displaying a 3D map by a computer or may be configured as a computer program for performing such display by the computer. Moreover, the present invention may be configured as a computer-readable recording medium such as a CD-R, a DVD or the like in which such computer program is recorded.

### [Brief Description of the Drawings]

[Fig. 1] Fig. 1 is an explanatory view illustrating a display method of a 3D map display system.
[Fig. 2] Fig. 2 is an explanatory view illustrating configuration of the 3D map display system.
[Fig. 3] Fig. 3 is an explanatory view illustrating a structure of a 3D map database.
[Fig. 4] Fig. 4 is a flowchart of route guidance processing.
[Fig. 5] Fig. 5 is a flowchart of map display processing.
[Fig. 6] Fig. 6 is a flowchart of tunnel model generation processing.
[Fig. 7] Fig. 7 is an explanatory view illustrating a display example (1) of a 3D map.
[Fig. 8] Fig. 8 is an explanatory view illustrating a display example (2) of the 3D map.
[Fig. 9] Fig. 9 is an explanatory view illustrating a shape example of tunnel data in a second embodiment.
[Fig. 10] Fig. 10 is a flowchart of tunnel data modification processing.
[Fig. 11] Fig. 11 is a flowchart of map display processing in the second embodiment.

### [Description of Embodiments]

### Embodiment 1

### A. System configuration:

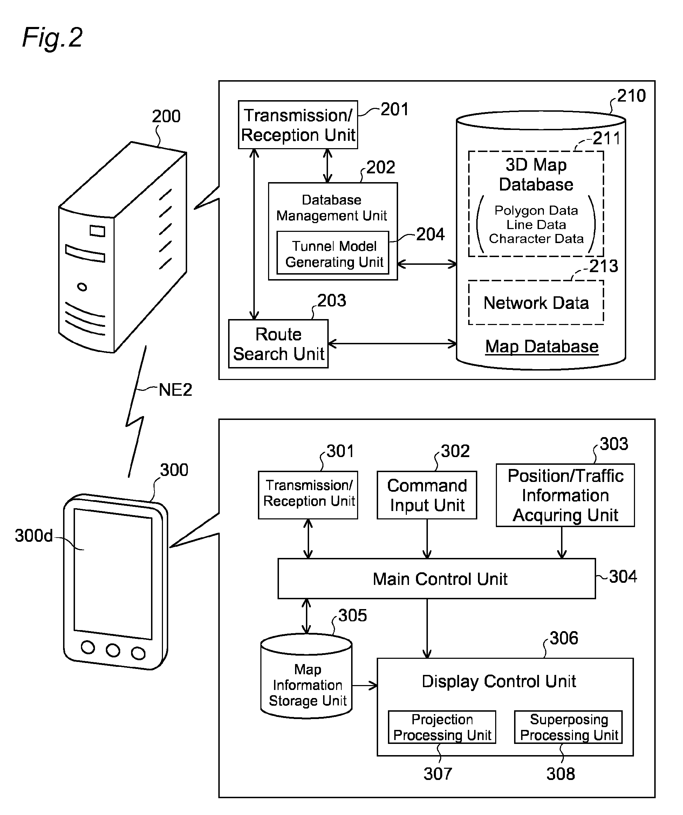

Fig. 2 is an explanatory view illustrating configuration of a 3D map display system. The 3D map display system of this embodiment is a system for giving route guidance by performing route search while a 3D map is displayed. The 3D map display system may be also configured as a system for displaying a 3D map merely in accordance with an instruction from a user or the like without having route search and route guidance functions.

The 3D map display system of the embodiment is configured by connecting a server 200 and a terminal 300 by a network NE2. A smart phone is assumed to be used as the terminal 300, but various apparatuses that can display a map such as a mobile phone, a mobile-side information terminal, a personal computer, a car navigation apparatus and the like can be used. Alternatively, the 3D map display system may be configured as a system in which the server 200 and the terminal 300 are integrated.

For the server 200 and the terminal 300, various illustrated functional blocks are prepared. These functional blocks are configured in a software manner by installing a computer program realizing the respective functions in the server 200 and the terminal 300 in this embodiment, but a part of or the whole of them may be configured in a hardware manner.

In this embodiment, configuration comprised of the server 200 and the terminal 300 is employed, but the 3D map display system may be configured as a stand-alone apparatus or may be configured as a discrete system comprised of many more servers and the like.

### (1) Server 200

A map database 210 stores a 3D map database 211 and network data 213. The 3D map database 211 stores polygon data representing a three-dimensional shape of a feature, line data, and character data. The network data 213 is data for route search representing a road by a link and a node.

Contents of the 3D map database 211 will be described. In this embodiment, the features are handled by being divided into linear objects and other general features. The linear object is a collective name of linear features such as a road and refers to an object capable of representing a shape by line data, that is, polyline data. The linear objects include a road, a tunnel, a railway, route guidance display, a river and the like, for example. The general features other than the linear object include a building and the like. In the 3D map database 211, polygon data representing a three-dimensional shape is prepared for the general feature such as a building. The line data is prepared for the linear object. However, as will be described later, the polygon data may be also prepared for the linear object.

A database management unit 202 manages input/output of data of the map database 210. In this embodiment, the objects stored in the 3D map database 211 are classified into a transmissive object and a non-transmissive object, and drawing is performed. Reading-out of data from the 3D map database 211 and this classification are both functions of the database management unit 202.

In the database management unit 202, a tunnel model generating unit 204 is prepared. The tunnel model generating unit 204 exerts a function of generating a three-dimensional polygon model by providing a road surface and a wall on the basis of the line data representing a tunnel.

A route search unit 203 searches a route from a starting point to a destination specified by a user of the terminal 300 by using the network data 213. Route search can be made by a known method such as a Dijkstra method.

A transmission/reception unit 201 performs transmission/reception of various types of data and commands to/from the terminal 300 through the network NE2.

### (2) Terminal 300

A main control unit 304 integrally controls an operation of each functional block provided in the terminal 300.

A transmission/reception unit 301 performs transmission/reception of data and commands with the server 200 to/from the network NE2.

A command input unit 302 inputs of instructions relating to route guidance and the like from the user. The instructions include specification of a starting point and a destination of route guidance, specification of display scale during map display and the like.

A position/traffic information acquiring unit 303 acquires a current position and the like of the terminal 300 from a sensor such as a GPS (Global Positioning System).

A map information storage unit 305 temporarily stores the 3D map database 211 acquired from the server 200 when a map is displayed. In this embodiment, the terminal 300 does not store all the map data in advance but acquires the map data required in accordance with a display range of the map as appropriate from the server 200. The map information storage unit 305 stores the map data acquired as above. At the same time it stores a result of route search.

A display control unit 306 displays a map on a display 300d of the terminal 300 by using the map data stored in the map information storage unit 305. In the display control unit 306, a projection processing unit 307 and a superposing processing unit 308 are provided. The projection processing unit 307 exerts a function of classifying the polygon data and the line data stored in the map information storage unit 305 into the transmissive object and the non-transmissive object and by arranging and projecting them in a virtual 3D space so as to generate a transmissive object projection view and a non-transmissive object projection view. The superposing processing unit 308 generates a superposed view (see a lower stage in Fig. 1) by superposing the generated transmissive object projection view on the non-transmissive object projection view with adjusted transmittance.

### B. Map database:

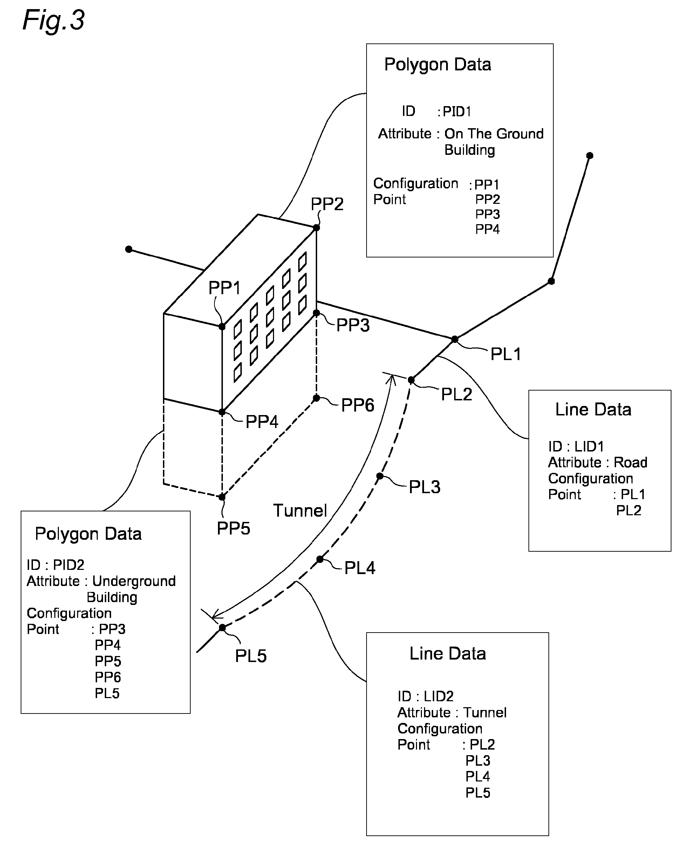

Fig. 3 is an explanatory view illustrating structure of the 3D map database. In the figure, structures of the line data and the polygon data stored in the 3D map database 211 are illustrated.

The line data is data representing a linear feature such as a road and a tunnel and as illustrated, it stores data such as an ID, an attribute, and a configuration point. The ID is identification information of each line data. The attribute is information indicating a type of each line data, that is, whether it is a "road" or a "tunnel". The attribute information may include a type of the roads such as a national road, a prefectural road and the like, a width of the road, a number of lanes, regulations such as one-way and the like other than the above. The configuration point is a three-dimensional coordinate of a point defining a shape of the road.

In the example in the figure, the line data given ID = L1D1 (a portion corresponding to a road indicated by a solid line in the figure) is a "road" by the attribute and indicates that its shape is defined by the configuration points PL1 and PL2. The line data given LD = L1D2 (a portion corresponding to a road indicated by a broken line in the figure) is a "tunnel" by the attribute and indicates that its shape is defined by the configuration points PL2 to PL5.

The polygon data is data representing a feature such as a building and has a data structure similar to that of the line data. However, it is the data having the configuration point which gives a three-dimensional coordinate of a top point of the polygon representing a three-dimensional shape.

In the example in the figure, the polygon data given ID = P1D1 (a portion corresponding to the road indicated by the solid line in the figure) is a "building on the ground" based on the attribute thereof, and indicates that its shape is defined by the configuration points PP1 to PP4 and the like of a surface illustrated in the figure. Since the building on the ground has other surfaces, the configuration point further stores a coordinate indicating a top point of each of the surfaces. The polygon data given LD = P1D2 (a portion corresponding to the road indicated by the broken line in the figure) is an "underground building" based on the attribute thereof, and indicates that its shape is defined by the configuration points PP3 to PP6 and the like. Since the underground building also has other surfaces, the configuration point further stores a coordinate indicating a top point of each of the surfaces.

In this embodiment, the tunnel and the road are handled as separate features, and the building on the ground and the underground building are also handled as separate features. Instead of this, such a method may be employed that the illustrated building on the ground and the underground building as a whole may be handled as one feature, and attributes such as a part on the ground, an underground part and the like are given to each configuration point or a polygon.

### C. Route guidance processing:

### (1) Route guidance processing:

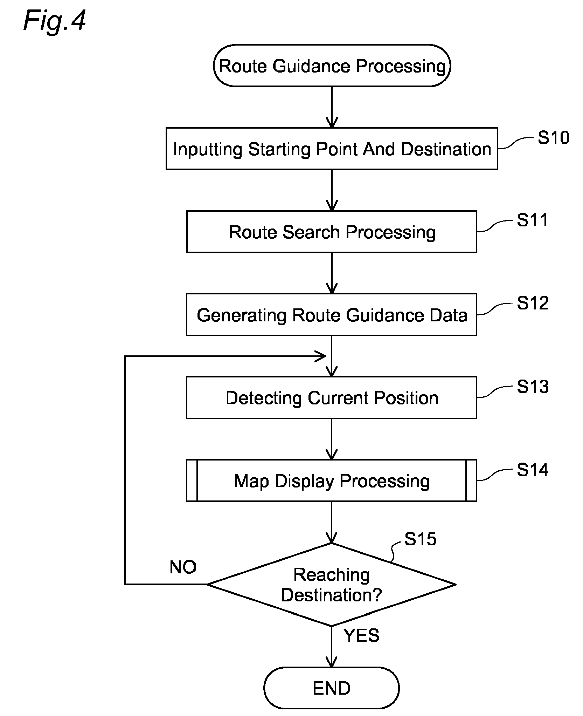

Fig. 4 is a flowchart of route guidance processing. The route guidance processing is processing of searching a route from a starting point to a destination specified by the user and of giving guidance for that. This is processing executed mainly by the route search unit 203 of the server 200 and the display control unit 306 of the terminal 300 and the like in collaboration and is processing executed by CPUs of the server 200 and the terminal 300 in terms of hardware.

When the processing is started, the terminal 300 receives an input of specification of a starting point and a destination from the user (Step S10). The current position may be used as the starting point.

The server 200 receives information on the starting point and the destination from the terminal 300 and performs route search by referring to the network data 213 (Step S11). For the route search, a known method such as the Dijkstra method can be employed.

Then, on the basis of the route search result, route guidance data is generated (Step S12). The route guidance data is data representing the result of the route search by a link line of the network data 213. The route guidance data is transmitted as the route search result to the terminal 300.

The terminal 300 executes processing of guiding a route while displaying the 3D map in accordance with the current position of the user.

First, the terminal 300 detects the current position of the user (Step S13). The current position can be detected by using a sensor such as a GPS.

Then, the terminal 300 displays the 3D map by the map display processing (Step S14). Contents of the processing will be described later in detail.

The terminal 300 repeatedly executes the aforementioned processing until the destination is reached (Step S15).

### (2) Map display processing:

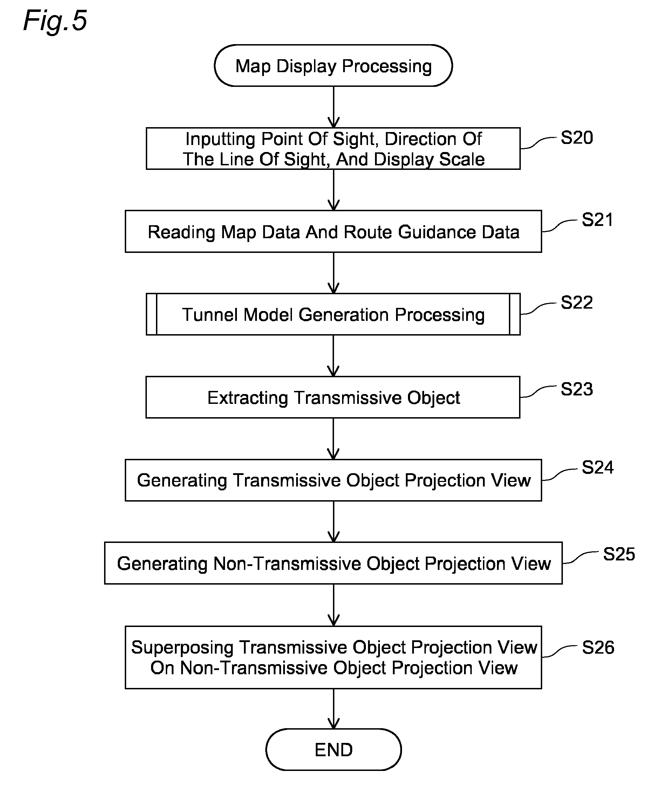

Fig. 5 is a flowchart of the map display processing. This is processing corresponding to Step S14 in the route guidance processing (Fig. 4) and is processing executed mainly by the display control unit 306 of the terminal 300.

When the processing is started, the terminal 300 receives inputs of the point of sight, the direction of the line of sight, and the display scale (Step S20). The point of sight may be determined on the basis of the current position. The direction of the line of sight may be determined on the basis of the current position and the route to be travelled.

Then, the map data in a range to be displayed as the 3D map and the route guidance data are read (Step S21). In order to display the 3D map, in this embodiment, the terminal 300 first reads the data stored in the map information storage unit 305 and then, if the map data is insufficient for display of the map, the terminal 300 acquires a shortage from the server 200.

Subsequently, the server 200 executes the tunnel model generation processing (Step S22). This processing is processing for generating a 3D model of a tunnel by generating a road surface and a tunnel wall on the basis of the line data of the tunnel. Details of the processing will be described later. This processing is also executed only for the tunnel with a shortage similarly to reading of the map data and the like (Step S21) since the tunnel model that has been already generated is stored in the map information storage unit 305.

The terminal 300 extracts a transmissive object from a feature displayed in the map (Step S23). In this embodiment, a tunnel is made to be a transmissive object.

Then, the terminal 300 arranges the transmissive object in a virtual three-dimensional space and generates a transmissive object projection view by performing perspective projection (Step S24). Moreover, a feature other than the transmissive object, that is, the non-transmissive object is arranged separately in the virtual three-dimensional space and perspective projection is performed so as to generate a non-transmissive object projection view (Step S25). Projecting conditions when the transmissive object projection view and the non-transmissive object projection view are generated, that is, the position of the point of sight, the direction of the line of sight and the like are set the same.

Finally, the terminal 300 superposes the transmissive object projection view on the obtained non-transmissive object projection view (Step S26). As a result, a superposed view illustrated on the lower stage in Fig. 1 can be obtained. In superposition, the transmittance of the transmissive-object projection view is adjusted. In this embodiment, the transmittance is set to such a degree that the user has an illusion that the transmissive object projection view is visually recognizable by making each feature in the non-transmissive object projection view such as the ground surface transmissive. The transmittance may be constant over the whole transmissive-object projection view or may be changed depending on the region.

### (3) Tunnel model generation processing:

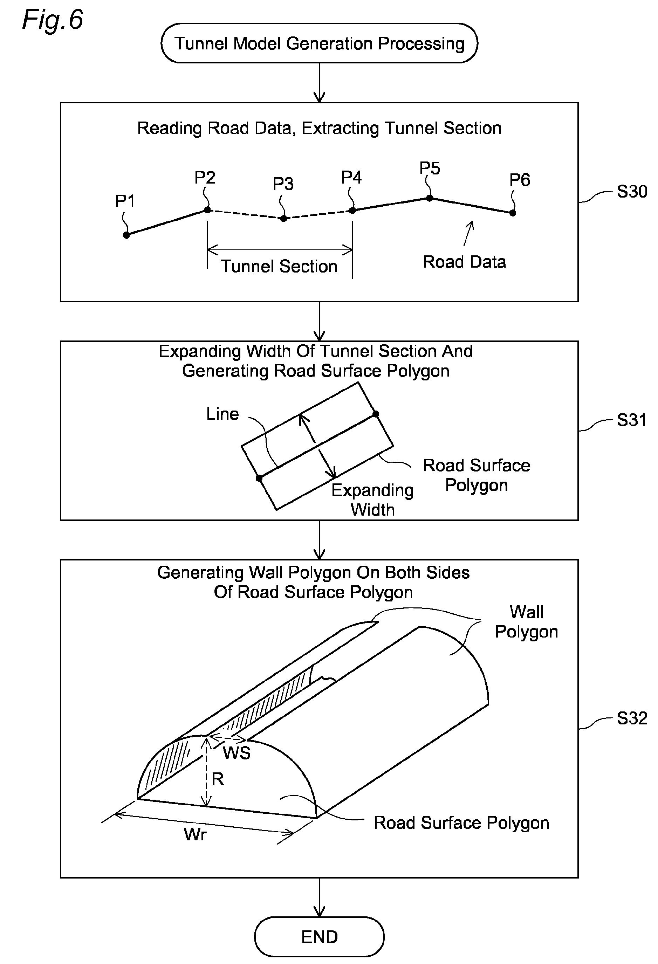

Fig. 6 is a flowchart of the tunnel model generation processing. This processing is processing corresponding to Step S22 in the map display processing (Fig. 5) and processing executed by the server 200. It may be executed by the terminal 300 if processing capacity of the terminal 300 is sufficient.

When the processing is started, the server 200 reads the road data and extracts a tunnel section (Step S30). An example of the processing is illustrated in the figure. In this example, the road data is given in a format of the line data defined by configuration points P1 to P6. Among them, if an attribute of a "tunnel" is given to the section from the configuration points P2 to P4 indicated by the broken line, the server 200 extracts this section of the configuration points P2 to P4 as a tunnel section. If the road and the tunnel are stored in the 3D map database as separate features, it is only necessary that a feature given the attribute of the "tunnel" is extracted without requiring application of the aforementioned complicated processing.

Then, the server 200 expands a width of the tunnel section and generates a road surface polygon (Step S31). A state of the processing is exemplified in the figure. A line segment at a center indicated as "line" is a shape of a line given by the line data. The server 200 expands the width by parallelly moving the line in the right-and-left direction orthogonal to this line. By executing this to all the configuration points of the tunnel section, the road surface polygon can be generated. The width of the road-width expansion may be a constant value or may match the width of the road connected to the tunnel. Alternatively, it may be so configured that attribute information such as the road width or the number of lanes may be prepared in advance for the tunnel section, and the width of road-width expansion is determined on the basis of such information.

The server 200 generates a wall polygon on both sides of the road surface polygon (Step S32). An example of the processing is illustrated in the figure. In this example, a wall having a 1/4 arc shaped section is installed on the both sides of the road surface polygon. A radius R of the wall can be arbitrarily set but it may match a height regulated by laws and regulations relating to roads. In this embodiment, a gap WS is provided between the wall polygons on the both sides. That is because presence of the gap WS allows visual recognition of the road surface even when the tunnel is displayed three-dimensionally. A value of the gap WS can be also determined arbitrarily, but a value calculated by a calculation formula WS = road width Wr - 2 x R is employed in this embodiment. That is, a gap inevitably obtained when the wall polygons each having the 1/4 arc with the radius R (center angle of 90 degrees) are generated from both ends of the road is WS. To the contrary, the radius R may be adjusted after the road width Wr is determined or the center angle of the wall polygon may be set to a value smaller than 90 degrees by considering visibility.

Here, the wall polygon having the arc shape is exemplified, but the shape of the wall polygon is arbitrary and may be a flat plate shape.

### D. Display example:

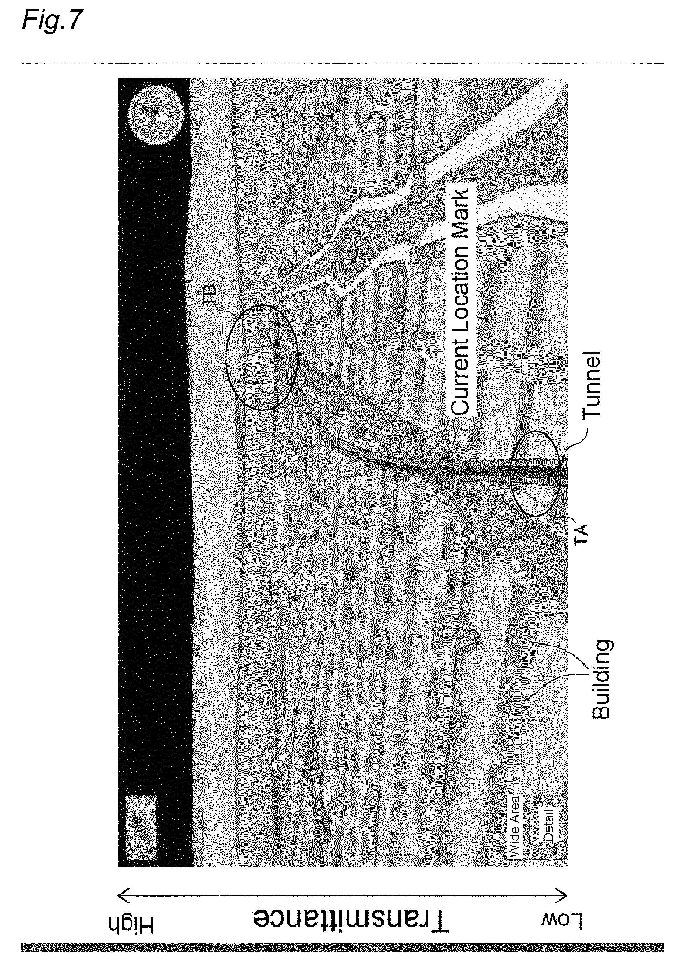

Fig. 7 is an explanatory view illustrating a display example (1) of the 3D map. An example in which the tunnel is displayed as a transmissive object is illustrated. A curve drawn in a vertical direction in the vicinity of a center is the tunnel. Around it, roads, buildings and the like are drawn as non-transmissive objects. Since the tunnel should be located under the ground surface, the tunnel is not displayed in the 3D map, but it is known that the tunnel is displayed in the 3D map of this embodiment. Therefore, in the route guidance, even if a route passing through the tunnel is selected, a current location mark is displayed on the tunnel, and display without a sense of discomfort can be realized for the user.

In the example in Fig. 7, when the transmissive object projection view is superposed, transmittance is changed in accordance with the region. The transmittance is lowered for a region on a lower part of the transmissive object projection view, that is, a portion closer to the position of the point of sight, while the transmittance is increased for a region on an upper part, that is, a portion far from the point of sight. By configuring as above, fade-out display can be realized such that the tunnel is displayed clearly in a lower region TA, while it is displayed slightly in a far region TB. As a result, a depth of the tunnel can be represented, and giving of excessive information to the user which causes confusion in the user can be avoided. To change the transmittance of the tunnel which is one of the features in accordance with the distance from the point of sight usually needs processing such as setting of the transmittance for each section of a feature before projection and increases the processing load, but since the transmittance is set for the transmissive object projection view as a two-dimensional image after the projection in this embodiment, the fadeout display can be realized with a light processing load.

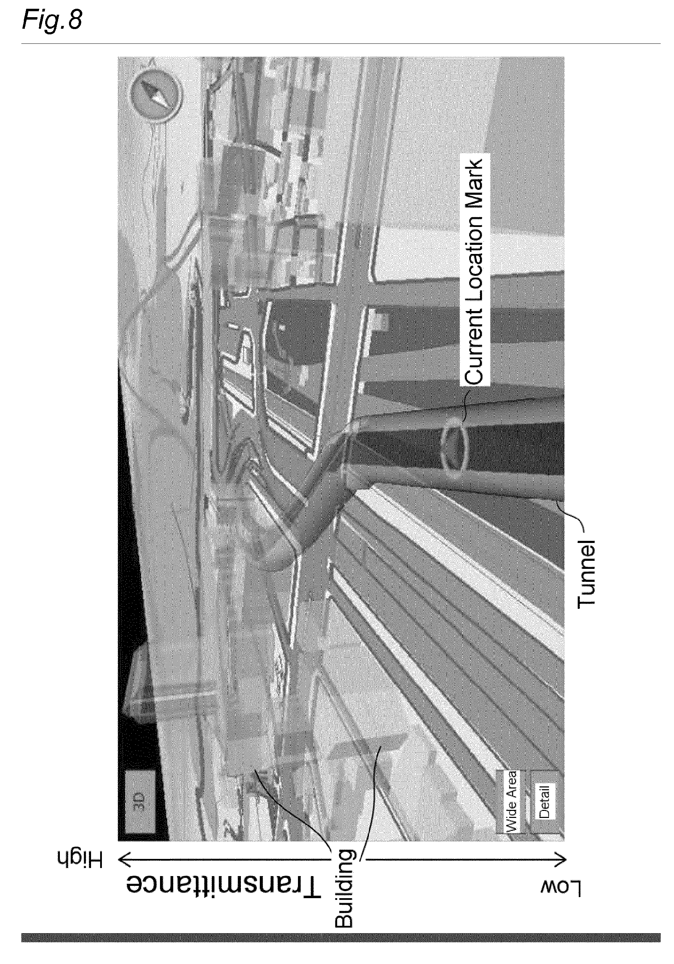

Fig. 8 is an explanatory view illustrating a display example (2) of the 3D map. An example in which a part of the building is also handled as a transmissive object together with the tunnel is illustrated. Transmittance is set so that it is low in the portion closer to the point of sight and high in the far portion. By handling the building as the transmissive object, a merit that the tunnel and the road can be recognized easily can be obtained.

In the illustrated example, all the buildings are transmissive objects, but only the buildings shielded by other buildings and the like may be the transmissive objects. As a result, similarly to the display that the ground surface becomes transmissive and the tunnel looks as if it is visually recognizable, display that the building on the front becomes transmissive and the building behind it looks as if it is visually recognizable can be realized.

According to the 3D map display system of the first embodiment described above, a shielded feature such as a tunnel can be displayed as if a feature on a shielding side is transmissive, and highly useful display as a map can be realized without a sense of discomfort.

### Embodiment 2

Subsequently, a 3D map display system of a second embodiment will be described. In the second embodiment, a data structure of a tunnel handled as a transmissive object is different from that of the first embodiment.

### (1) Modification of tunnel data:

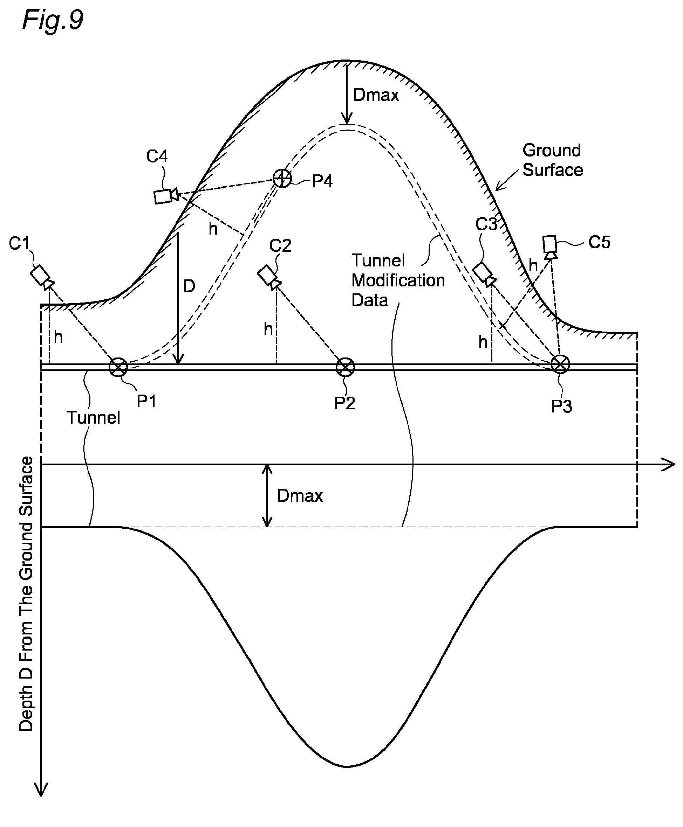

Fig. 9 is an explanatory view illustrating a shape example of the tunnel data in the second embodiment. A tunnel penetrating in a mountain substantially horizontally is shown from a side. A landform is schematically represented on an upper stage of the figure, and a graph indicating a depth D from a ground surface is illustrated on a lower stage. The depth D indicates a distance from the ground surface to the tunnel as illustrated on the upper stage and is positive if the tunnel is in the ground.

The ground surface drawn having an upward projecting curved line in the figure on the upper stage is a mountain. The tunnel goes substantially horizontally as indicated by a solid line on the lower part. Since the ground surface rises like a mountain, the depth D from the ground surface becomes the maximum in the vicinity of a center as illustrated in the figure on the lower stage.

Assume a case in which the route guidance is displayed during traveling through the tunnel in such a condition. The position of the point of sight (hereinafter also referred to as a camera position) and the direction of the line of sight when the route guidance is displayed is preferably set from rear above of the current position to the current position.

For example, for the current position P1, perspective projection is performed by using a point at a height h in the rear thereof as a camera position C1. As a result, a 3D map including the current position and a route in an advancing direction can be displayed.

However, in the case of current positions P2 and P3, camera positions C2 and C3 are set in this method. Since these camera positions are in the ground, a 3D map enters a state in which features other than the tunnel are not drawn. In order to avoid this, if the camera positions C2 and C3 are set at high positions of the ground surface, for example, then, a distance to the tunnel is too long, and another problem occurs that the tunnel is drawn only in a small form this time.

In order to avoid such a negative effect, modification is made in this embodiment such that the depth D from the ground surface of the tunnel becomes a maximum value Dmax or less. Tunnel modification data obtained by applying this modification represents a shape curved upward along the shape of the mountain as indicated by a broken line on the upper stage of the figure. Only height data of the tunnel is modified, and two-dimensional position data is not modified. Assume a case in which the route guidance is given by using the tunnel modification data.

At a current position P4, the position of the point of sight is set to a camera position C4 at a height h in the rear along the tunnel modification data. Since this is located above the ground surface, a 3D map without a sense of discomfort can be displayed.

At the current position P3, the position of the point of sight is set to a camera position C5 at the height h in the rear along the tunnel modification data. Therefore, in this case, too, it is set above the ground surface, and a 3D map without a sense of discomfort can be displayed.

The tunnel modification data does not represent a real tunnel shape. However, by preparing data for convenience of map display with an underground depth of the tunnel modified as above, display of a map without a sense of discomfort can be realized during the route guidance even without using complicated algorithm.

Since the maximum value Dmax of the underground depth is a regulating value in order to avoid going of the camera position under the ground as described above, it can be set arbitrarily within a range larger than a value of the height h determining the camera position.

### (2) Tunnel data modification processing:

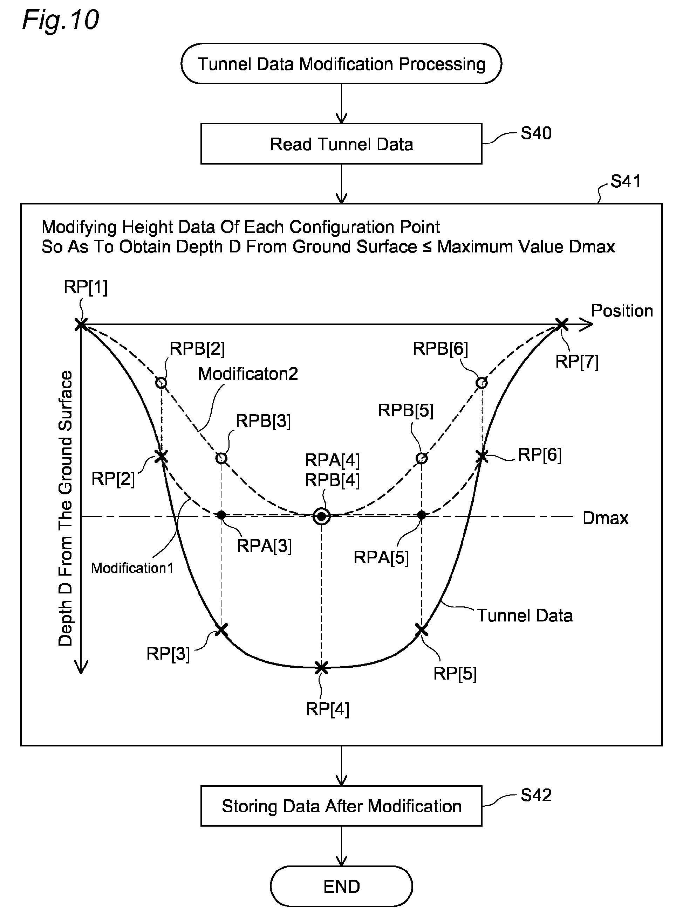

Fig. 10 is a flowchart of tunnel data modification processing. This processing may be executed by the server 200 (see Fig. 1) or may be executed by another map data generating apparatus connected to the server 200. In either case, it can be configured in a software manner by installing a computer program for realizing a function illustrated in Fig. 10. Here, description will be made assuming that the processing is executed by the server 200.

When the tunnel data modification processing is started, the server 200 first reads the tunnel data (Step S40) and modifies the height data of each configuration point of the tunnel data so as to obtain depth D from the ground surface ≤ maximum value Dmax (Step S41).

An example of a modification method is illustrated in the figure. A solid line indicates the tunnel data before modification and it is configured by configuration points RP [1] to RP [7]. The depth D from the ground surface exceeds the maximum value Dmax at the configuration points RP [3] to RP [5] in the vicinity of a center.

In a first modification method of the height data, each of the configuration points RP [3] to RP [5] is modified so that the ground surface depth becomes the maximum value Dmax. The modification data in this method is the configuration points RPA [3] to RPA [5]. In the first modification method, a tunnel shape after the modification is slightly distorted in the vicinity of the center, but the number of configuration points to be modified can be small, which is a characteristic.

In a second modification method, first, a height of the configuration point RP[4] where the ground surface depth is the largest is modified to the maximum value Dmax. This configuration point is RPB [4]. Then a smooth curved line passing the configuration points RP [1] and RP [7] on both ends of the tunnel section and the modified configuration point RPB[4] after the modification, that is, a spline curve, for example, is acquired, and a height of each configuration point is modified so as to ride on this curved line. As a result, the configuration points RP[2], RP[3], RP[5], and RP[6] are modified to RPB [2], RPB [3], RPB [5], and RPB [6], respectively. In the second modification method, there are many configuration points to be modified, but it has a merit that a smooth tunnel shape as a whole can be realized.

Either one of the first and second modification methods may be selected.

When the tunnel data has been modified by the aforementioned processing, the server 200 stores the data after this modification (Step S42) and finishes the tunnel data modification processing. In the route guidance, the tunnel is displayed by using the data after the modification.

### (3) Map display processing:

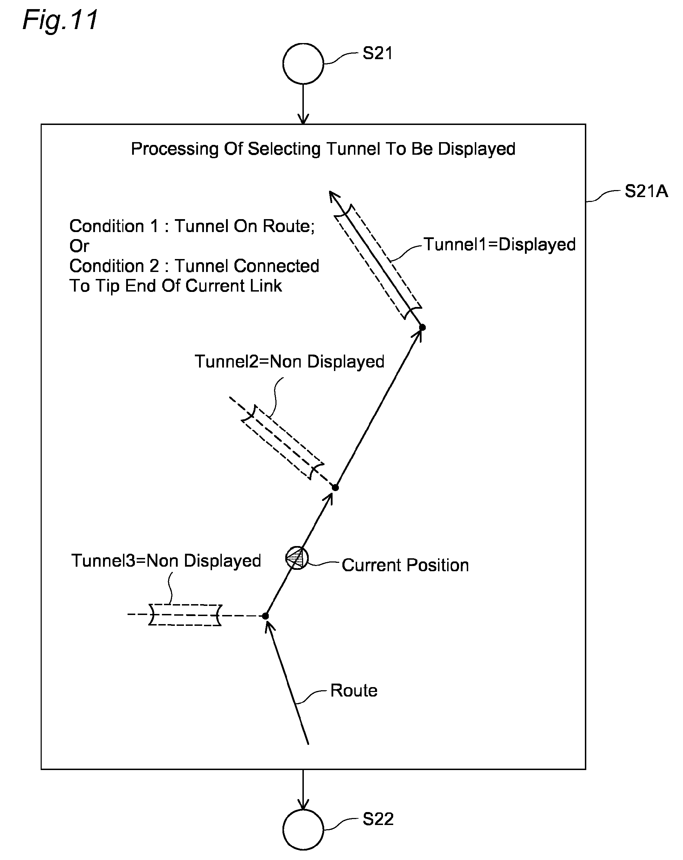

Fig. 11 is a flowchart of the map display processing in the second embodiment. In the map display processing in the first embodiment (Fig. 5), processing of selecting a tunnel to be displayed is added (Step S21A in Fig. 11) before the tunnel model generation processing (Step S22 in Fig. 5). Since the tunnel is a feature which should not be visually recognized, if all the tunnels are made to be display targets, the map becomes extremely overcrowding, which might confuse the user and thus, in the second embodiment, only the tunnels with higher importance are made to be display targets.

The tunnels with higher importance are determined on the basis of the following two conditions:
condition 1: tunnel on the route;
condition 2: tunnel connected to tip end of current link

In the second embodiment, the tunnel satisfying at least either one of the condition 1 and the condition 2 is made to be a display target, while the others are excluded from the display targets.

In the figure, a determination example of the aforementioned conditions is illustrated. Assume that a route indicated by a solid line in the figure has been obtained as the result of the route search. Respective arrows indicate an advancing direction of the route and also indicate links constituting the route. Black circles at connection portions of the links indicate nodes.

A tunnel 1 drawn on the uppermost stage is a tunnel on the route. Therefore, the tunnel 1 is a display target under the aforementioned condition 1.

A tunnel 2 on the middle stage is a tunnel connected to the node ahead of the link where the current position is present. Therefore, the tunnel 2 is the display target under the aforementioned condition 2. The reason why the tunnel 2 is made to be a display target though it is not a tunnel on the route is as follows. Since the tunnel 2 is connected to the node on the route, it constitutes a branch point through which the user passes without any fail when traveling on the route. If the tunnel 2 is excluded from the display targets, the map used for the route guidance makes display which looks as if the aforementioned branch point does not exist, which might confuse the user. In this embodiment, in order to avoid such confusion, those constituting a branch ahead of the current position such as the tunnel 2 are made to be display targets.

Since a tunnel 3 on the lower stage does not satisfy either of the conditions 1 and 2, it is excluded from the display targets. The tunnel 3 is also connected to the route and constitutes a branch, but the current position has already passed through the branch, and even if the tunnel 3 is not displayed, there is no concern that the user is confused by that. The tunnel 2 which was previously made to be a display target is also switched to a non-display state similarly to the tunnel 3 when the branch has been passed.

Processing after the tunnel is selected is similar to the first embodiment (Fig. 5). A tunnel model is generated for the selected tunnel (Step S22 in Fig. 5), the transmissive object is extracted (Step S23), the transmissive object projection view is generated (Step S24), the non-transmissive object projection view is generated (Step S25), and the both are superposed (Step S26) so as to display a 3D map.

According to the second embodiment, in addition to the effect of the first embodiment, even if the camera position is set in the relative relation with the current position, trouble that the camera goes under the ground can be avoided. Moreover, by selecting a tunnel to be displayed, information offered to the user can be appropriately suppressed.

The embodiments of the present invention have been described.

It is not necessary to comprise all the various features described in the aforementioned first and second embodiments, but a part of them may be omitted or combined in application as appropriate. For example, the modification of the tunnel data or the tunnel selection processing illustrated in the second embodiment can be also applied to the first embodiment. Moreover, in the second embodiment, modification of the depth or selection of a display target may be performed for the underground buildings as targets similarly to the tunnel.

The present invention is capable of employing various variations in addition to the aforementioned embodiments.
(1) A feature that can be made to be a transmissive object is not necessarily limited to a tunnel or an underground building. A feature present on the ground may be made to be a transmissive object.
(2) A part processed by software in the embodiments can be replaced by hardware or vice versa.

### [Industrial Applicability]

The present invention relates to a 3D map display system for displaying a 3D map representing a feature that cannot be visually recognized such as an underground structure without a sense of discomfort.

### [Reference Numerals]

- 200: Server
- 201: Transmission/Reception Unit
- 202: Database Management Unit
- 203: Route Search Unit
- 204: Tunnel Model Generating Unit
- 210: Map Database
- 211: 3D Map Database
- 213: Network Data
- 300: Terminal
- 301: Transmission/Reception Unit
- 302: Command Input Unit
- 303: Position/Traffic Information Acquiring Unit
- 304: Main Control Unit
- 305: Map Information Storage Unit
- 306: Display Control Unit
- 307: Projection Processing Unit
- 308: Superposing Processing Unit

## Claims

1. A 3D map display system for displaying a 3D map representing a feature three-dimensionally, comprising:
a map database for storing a 3D model of the feature;
a projecting condition setting unit for setting a projecting condition for projecting the 3D map;
a transmissive object extracting unit for extracting at least a part of the feature shielded by a ground surface or other features as a transmissive object in accordance with its attribute;
a projection processing unit for generating a transmissive object projection view in which the transmissive object is projected and a non-transmissive object projection view in which a feature other than the transmissive object is projected; and
a superposing processing unit for superposing the transmissive object projection view on the non-transmissive object projection view at a predetermined transmittance.

2. The 3D map display system according to claim 1, wherein the transmissive object is an underground structure.

3. The 3D map display system according to claim 2, wherein
the map database stores a 3D model of a tunnel in a form of a polygon representing a line or a road surface;
the transmissive object is the tunnel;
a tunnel model generating unit for generating a tunnel model by giving a wall to both sides of the road surface in the 3D model of the tunnel stored in the map database is further provided; and
the projection processing unit generates the transmissive object projection view on the basis of the tunnel model.

4. The 3D map display system according to claim 3, further comprising:
network data representing a road by a node and a link; and
a current position detecting unit for detecting a current position of the user of the 3D map display system, wherein
the transmissive object extracting unit extracts from among the tunnels, as the transmissive object, the tunnels on the route or the tunnels connected to the node ahead of the link where the current position is present, on the basis of route data representing a route to be guided by the 3D map display system by connection of the links and the network data.

5. The 3D map display system according to any one of claims 2 to 4, wherein
the projection processing unit performs the projection by perspective projection with a point of sight for the projection set to a position at a predetermined height of the point of sight relatively to the underground structure, and
a 3D model of the underground structure is prepared with a depth under the ground surface being kept smaller than the height of the point of sight.

6. The 3D map display system according to any one of claims 1 to 5, wherein
the superposing processing unit performs the superposition with transmittance of an upper part of the transmissive object projection view higher than that of a lower part.

7. A map data generating apparatus for generating data of an underground structure for the 3D map display system according to claim 5, comprising:
a map database storing a 3D model of the underground structure;
a modifying unit for modifying height data so that, in a portion where a depth under the ground surface is larger than the height of the point of sight, the depth is the height of the point of sight or less in the 3D model of the underground structure; and
a map database management unit for storing the modified 3D model in the map database.

8. A 3D map display method for displaying a 3D map representing a feature three-dimensionally, comprising steps executed by a computer of:
making an access to a map database storing a 3D model of the feature;
setting a projecting condition for projecting the 3D map;
extracting at least a part of the feature shielded by a ground surface or other features as a transmissive object in accordance with an attribute thereof;
generating a transmissive object projection view in which the transmissive object is projected and a non-transmissive object projection view in which a feature other than the transmissive object is projected, respectively; and
superposing the transmissive object projection view on the non-transmissive object projection view at predetermined transmittance.

9. A computer program for displaying a 3D map representing a feature three-dimensionally configured to realize, by a computer, functions of:
making an access to a map database storing a 3D model of the feature;
setting a projecting condition for projecting the 3D map;
extracting at least a part of the feature shielded by a ground surface or other features as a transmissive object in accordance with an attribute thereof;
generating a transmissive object projection view in which the transmissive object is projected and a non-transmissive object projection view in which a feature other than the transmissive object is projected, respectively; and
superposing the transmissive object projection view on the non-transmissive object projection view at predetermined transmittance.
